# EUROPEAN PATENT SPECIFICATION

(11) **EP 0 434 314 B1**
(45) Date of publication and mention of the grant of the patent: **28.02.1996**
(21) Application number: 90313656.2
(22) Date of filing: 14.12.1990
(51) Int. Cl.: G06F 1/16, G06F 3/033, G06K 11/16

(54) **Touch sensitive display**
Berührungsempfindliches Anzeigegerät
Dispositif d'affichage sensible au toucher

(30) Priority: 18.12.1989 GB 8928557
(43) Date of publication of application: 26.06.1991
(73) Proprietor: International Business Machines Corporation, Armonk, N.Y. 10504 (US)
(72) Inventor: Lewis, Griffith John, Horton Heath, Hampshire (GB); Shepherd, Edward Trevor, South Wonston, Hampshire (GB); Beeteson, John Stuart, Romsey, Hampshire SO51 8PL (GB); Clitheroe, Adrian Mark, Fareham, Hampshire PO14 4PA (GB)
(74) Representative: Burt, Roger James, Dr.

(56) References cited:
- EP-A- 0 256 251
- WO-A-85/04740

## Description

The present invention relates to a display specifically and in particular to, touch sensitive display comprising a push plate responsive to touch stimuli bonded to a display screen by a transparent adhesive elastic compound.

A common example of a display screen for use in a touch sensitive display is a cathode ray tube (CRT). Additional apparatus is attached to the CRT for detecting touch stimuli. It is common for such a display to be part of a computer system responsive to instructions issued by touch stimuli. To date, touch sensitive displays have been implemented using a variety of different technologies for detecting touch stimuli. In one such technology, a transparent overlay is placed over a CRT screen. The overlay contains an array of electromechanical force sensors which are generally either resistive, conductive or capacitive in form. The sensors are arranged in rows and columns spanning the CRT screen area. Each sensor therefore corresponds to a particular screen location. A signal from one such sensor is thus indicative of a particular touch location. However, these sensors can partially obscure from view, any image displayed on the display. Furthermore, the sensor materials are generally fabricated on a fragile wafer-like substrate which can easily become damaged during assembly use.

Another technology involves the processing of an optical signal scanned across a CRT screen in order to determine a touch location. In general these technologies have problems associated with optical parallax. Furthermore, detection of the optical signal can be prevented by foreign bodies in the vicinity of the CRT screen.

Another technology involves an array of force sensitive transducers mounted around the periphery of a CRT screen. Each transducer generates an electrical signal in response to and representative of a touch stimulus applied to the CRT screen. The relative magnitudes of these signals can be processed to determine the location on the CRT screen at which the stimulus was applied. A problem with this arrangement is that the force transducers are sensitive to spurious vibrations of the display. Furthermore, the force transducers are exposed to any out of balance forces which may be generated within the CRT construction during assembly of the display. Such undesirable effects can be reduced by locating the array of force transducers around the periphery of a transparent push plate which is shaped to match the contours of, whilst not making contact with the CRT screen. A disadvantage with this arrangement is that a visually objectionable optical parallax effect is caused by the push plate raised above the CRT screen. Another disadvantage with this arrangement is that internal reflections can occur between the CRT screen and the push plate. Furthermore, this arrangement generally requires mountings for the push plate which are resilient enough to withstand repeated touch operations as part of a normal product lifetime, yet not so rigid as to limit movement of the push plate relative to the CRT screen.

EP 256 251 describes an example of a touch sensitive display having a push plate arrangement similar to that described above. The touch sensitive screen assembly comprises a frame with openings to align with mounting brackets extending from a display screen such as a CRT. The frame supports a rigid transparent push plate facing the display. An array of force sensitive transducers is mounted on the push plate surface facing the display. The touch screen assembly is held in position via deformable members which connect to both the openings on the frame and the brackets on the display output device. The deformable members provide measurement repeatability during the normal lifetime of the display. However, the deformable members are large in relation to conventional CRT mounting screws. In addition, this arrangement can also be sensitive to vibrations of the display and therefore complex electronic signal processing is required for conditioning the signals from the transducers. In general, interferance from such vibrational forces is more significant where the force transducers are arranged so as to bear the load of the display screen. In these arrangements, vibrations tend to move the display rather than the display screen.

An aim of the present invention is therefore to provide a touch display which is not affected by vibrational forces, and which further prevents optical problems arising from parallax or internal reflections.

In accordance with the present invention there is now provided a display comprising a display screen, a plate of a rigid transparent material, mounting means for mounting the plate on the display screen, touch sensing means cooperating with the mounting means for producing a plurality of electrical signals in response to and representative of a force applied to the plate; said force corresponding to a tactile stimulus of the plate, characterised in that the mounting means comprises a layer composed of a transparent, elastic, adhesive compound, having a similar refractive index to that of the display screen; said compound being applied between the plate and the display screen so as to bond the plate to the display screen.

This advantageously overcomes the aforementioned problems of parallax and internal reflection, which can occur in conventional force sensitive touch screen displays. Furthermore, this arrangement prevents forces generated during assembly of the display from applying an undesirable bias to the array. This is because the push plate is supported by the compound not by the transducers. Also, in this arrangement, the transducers are exposed to a much reduced mass in comparison with aforementioned arrangements where the transducers are supporting the whole display screen. This system is therefore much less sensitive to spurious vibrations. This arrangement further permits the touch screen to be a compact sealed enclosure thereby simplifying the manufacture of the touch sensitive display.

Where the display screen is a CRT, yet another advantage of this arrangement is that fragile and non abrasion-resistant coatings of the CRT screen such as those used to reduce electrostatic fields (ESF coatings) can be applied to the screen without the possibility of removal through use during the lifetime of the display.

Preferably, the film has a thickness permitting the push plate to move both towards and away from the display in response to a touch stimulus. An advantage of this is that the sensitivity of the touch screen to touch stimuli remains uniform throughout the lifetime of the touch sensitive display. In addition, the film acts as a selective damping means which renders the touch screen immune from vibrations of the display.

A particularly preferred example of the present invention will now be described, by way of example only, with reference to the accompanying drawings in which:

Figure 1 is a block diagram of a computer system comprising a touch display of the present invention.

Figure 2 is a block diagram of a transducer arrangement for a touch display of the present invention.

Figure 3 is a perspective view of a CRT assembly to which a push plate is bonded in accordance with the present invention.

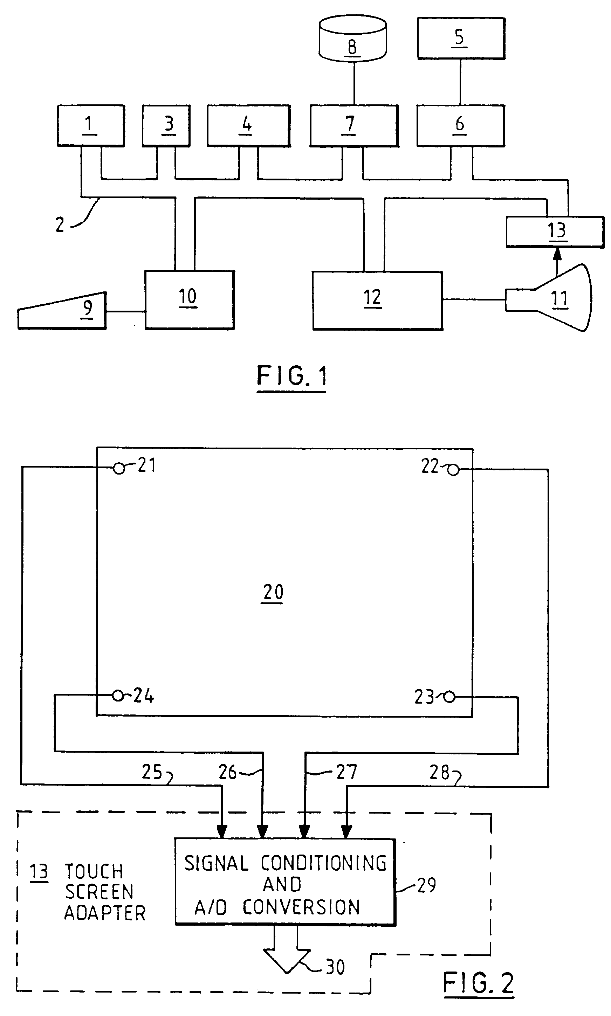

Figure 1 shows an example of a computer system including a touch sensitive display of the present invention. The computer system includes a central processing unit (CPU) 1 for executing program instructions.

A bus architecture 2 provides a data communication path between the CPU and other components of the computer system. A read only memory 3 provides secure storage of data. A fast random access memory 4 provides temporary storage of data. Data communication with a host computer system 5 is provided by a communication adapter 6. An I/O adapter 7 provides a means for communicating data both to and from a mass storage device 8.

A user can operate the computer system using a keyboard 9 which is connected to the bus architecture via a keyboard adapter 10. A touch display 11 of the present invention provides a visual output from the computer system. The visual output is generated by a display adapter 12. The user can also operate the computer system by applying touch stimulus to a touch screen on the touch display. A touch screen adapter 13 connects signals from the touch screen to the bus architecture of the computer system.

Referring now to Figure 2, the touch screen comprises a transducer including four force sensitive transducers 21,22,23,24 bonded to the four corners of a rectangular, transparent push plate 20. Four discrete electrical signals 25,26,27,28 are generated by the four transducers (21,22,23,24). Each electrical signal is produced by a different transducer. The four electrical signals (25,26,27,28) are separately processed by a signal conditioning and analog to digital (A to D) convertor portion 29 of the touch screen adapter 13. The signal conditioning and A to D conversion portion 29 thus produces a binary data output 30 indicative of relative forces measured by the four transducers (21,22,23,24). The binary data output is therefore representative of a location on the display at which a touch stimulus is applied.

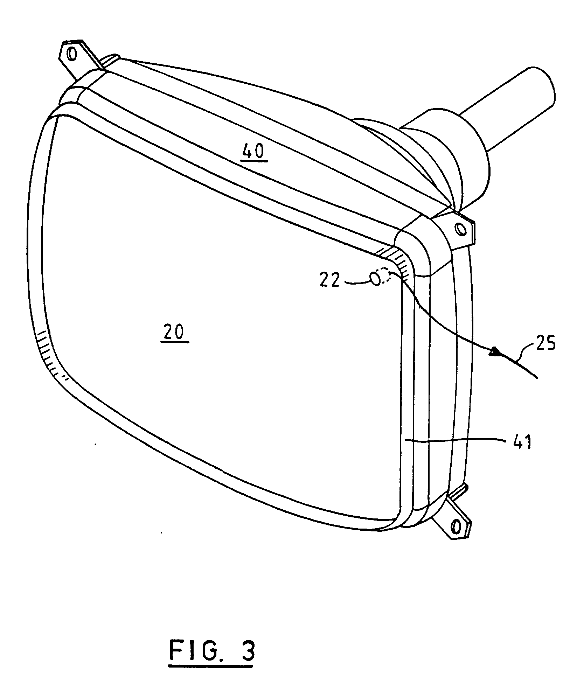

Referring now to figure 3 in accordance with the present invention, the push plate 20 is bonded to the face of the CRT 40 by a uniform layer or film 41 of adhesive, elastic, transparent compound hereinafter referred to as a gel. A commercially available example of such a gel is Sylgard (registered trademark) 527 A and B Silicone Dielectric Gel.

In this particular example of the present invention, the transducer array (21,22,23,24) is mounted on the push plate (120) as indicated in Figure 3 by transducer 21 producing electrical signal 25.

A touch sensitive display comprising a cathode ray tube has now been described by way of example of the present invention. It will however be appreciated that other examples of the present invention may comprise different display devices such as liquid crystal display panels or gas plasma panels. Furthermore, the touch sensitive display hereinbefore described, comprises a transducer array which is responsive to application of a tensile force to the push plate. The tensile force produces a deformation of the gel which is directed substantially at right angles to the face of the CRT. It will however be appreciated that the present invention will be equally useful in a touch sensitive display comprising a transducer array which is responsive to application of a torsional force to the push plate. In such a display, the torsional force is produced by a touch stimulus which skews the push plate relative to the display screen.

It will further be appreciated that, whilst an example of the present invention has been described with reference to a touch sensitive display comprising an array of piezoelectric force transducers, the present invention is not limited in application to this type of transducer alone. The present invention will also be useful in touch sensitive displays comprising arrays of either conductive, resistive, or capacitive sensors as used in the aforementioned overlay technologies.

## Claims

1. A touch sensitive display comprising a display screen (40), a plate (20) of a rigid transparent material, mounting means (41) for mounting the plate on the display screen (40), touch sensing means (21,22,23,24) co-operating with the mounting means (41) for producing a plurality of electrical signals (25,26,27,28) in response to and representative of a force applied to the plate; said force corresponding to a tactile stimulus of the plate (20), characterised in that the mounting means (41) comprises a layer (41) composed of a transparent, elastic, adhesive compound, having a similar refractive index to that of the display screen (40); said compound being applied between the plate (20) and the display screen so as to bond the plate to the display screen (40).

2. A display as claimed in Claim 1 wherein the compound (41) has an elasticity resistant to permanent set in the thickness of the layer through repeated tactile stimulus of the plate (20).

3. A display as claimed in Claim 2 wherein the layer (41) has a thickness permitting movement of the push plate (20) both towards and away from the display screen (40) in response to the tactile stimulus for enabling the touch sensing means to detect the touch stimulus.

4. A display as claimed in Claim 3 wherein the touch sensing means (21,22,23,24) comprises an array of force sensitive transducers (21,22,23,24).

5. A display as claimed in Claim 4 wherein the compound is a silicone dielectric gel.

6. A display as claimed in Claim 5 wherein the gel is a copolymer of first and second compounds.

7. A display as claimed in Claim 6 wherein the array of force sensitive transducers (21,22,23,24) are arranged to detect the tactile stimulus generating a tensile stress in the gel.

8. A display as claimed in Claim 6 wherein the array of force sensitive transducers (21,22,23,24) are arranged to detect the tactile stimulus generating torsional stress in the gel

9. A display as claimed in any preceding claim wherein the display screen comprises a cathode ray tube display screen (40).

10. A display as claimed in any claim preceding claim 9 wherein the display screen comprises a liquid crystal display screen.

## Patentansprüche

1. Ein berührungsempfindliches Anzeigegerät, umfassend einen Anzeigebildschirm (40), eine Platte (20) aus starrem transparentem Material, ein Befestigungsmittel (41) zum Befestigen der Platte an dem Anzeigebildschirm (40), ein Berührungssensormittel (21,22,23,24), das mit dem Befestigungsmittel (41) zusammenwirkt, um mehrere elektrische Signale (25,26,27,28) als Reaktion auf und als Vertretung für eine Kraft zu erzeugen, die auf die Platte gegeben wird; wobei die Kraft mit einem Berührungsreiz der Platte (20) korrespondiert, dadurch gekennzeichnet, daß das Befestigungsmittel (41) eine Schicht (41) umfaßt, die aus einer transparenten, elastischen, klebenden Mischung mit ähnlichem Brechungsindex wie dem des Anzeigebildschirms (40) besteht, wobei die Mischung zwischen der Platte (20) und dem Anzeigebildschirm aufgebracht ist, so daß sie die Platte auf dem Anzeigebildschirm (40) festklebt.

2. Ein Anzeigegerät nach Anspruch 1, bei dem die Mischung (41) eine Elastizität aufweist, die gegen bleibende Verformungen in der Dicke der Schicht durch wiederholte Berührungsreize der Platte (20) widerstandsfähig ist.

3. Ein Anzeigegerät nach Anspruch 2, bei dem die Schicht (41) eine Dicke aufweist, die es zuläßt, daß sich die Druckplatte (20) als Reaktion auf den Berührungsreiz sowohl auf den Anzeigebildschirm (40) zu als auch von ihm weg bewegt, damit das Berührungssensormittel den Berührungsreiz erkennen kann.

4. Ein Anzeigegerät nach Anspruch 3, bei dem das Berührungssensormittel (21,22,23,24) eine Matrix kraftempfindlicher Aufnehmer (21,22,23,24) umfaßt.

5. Ein Anzeigegerät nach Anspruch 4, bei dem die Mischung ein dielektrisches Silikongel ist.

6. Ein Anzeigegerät nach Anspruch 5, bei dem das Gel ein Kopolymer erster und zweiter Mischungen ist.

7. Ein Anzeigegerät nach Anspruch 6, bei dem die Matrix der kraftempfindlichen Aufnehmer (21,22,23,24) so angeordnet sind, daß sie den Berührungsreiz entdecken, der eine Zugbelastung in dem Gel erzeugt.

8. Ein Anzeigegerät nach Anspruch 6, bei dem die Matrix der kraftempfindlichen Aufnehmer (21,22,23,24) so angeordnet sind, daß sie den Berührungsreiz entdecken, der eine Drehbelastung in dem Gel erzeugt.

9. Ein Anzeigegerät nach einem der obigen Ansprüche, bei dem der Anzeigebildschirm einen Kathodenstrahlröhren-Anzeigebildschirm (40) umfaßt.

10. Ein Anzeigegerät nach einem der Ansprüche vor Anspruch 9, bei dem der Anzeigebildschirm einen Flüssigkristall-Anzeigebildschirm umfaßt.

## Revendications

1. Dispositif d'affichage sensible au toucher comprenant un écran d'affichage (40), une plaque (20) d'un matériau transparent rigide, un moyen de montage (41) destiné à monter la plaque sur l'écran d'affichage (40), des moyens de capteur de toucher (21, 22, 23, 24) coopérant avec le moyen de montage (41) afin de produire une pluralité de signaux électriques (25, 26, 27, 28) en réponse à une force appliquée sur la plaque et représentatifs de celle-ci, ladite force correspondant à un stimulus tactile de la plaque (20), caractérisé en ce que le moyen de montage (41) comprend une couche (41) constituée d'un composé transparent, élastique, adhésif présentant un indice de réfraction similaire à celui de l'écran d'affichage (40), ledit composé étant appliqué entre la plaque (20) et l'écran d'affichage de façon à coller la plaque à l'écran d'affichage (40).

2. Dispositif d'affichage selon la revendication 1 dans lequel le composé (41) présente une élasticité résistant à une déformation plastique dans l'épaisseur de la couche par l'intermédiaire de stimulus tactile répété de la plaque (20).

3. Dispositif d'affichage selon la revendication 2 dans lequel la couche (41) présente une épaisseur qui permet le mouvement de la plaque d'appui (20) en rapprochement et en éloignement de l'écran d'affichage (40) en réponse au stimulus tactile afin de permettre aux moyens de capteur de toucher de détecter le stimulus de toucher.

4. Dispositif d'affichage selon la revendication 3 dans lequel les moyens de capteur de toucher (21, 22, 23, 24) comprennent un réseau de transducteurs sensibles à la force (21, 22, 23, 24).

5. Dispositif d'affichage selon la revendication 4 dans lequel le composé est un gel diélectrique de silicone.

6. Dispositif d'affichage selon la revendication 5 dans lequel le gel est un copolymère de premier et second composés.

7. Dispositif d'affichage selon la revendication 6 dans lequel le réseau de transducteurs sensibles à la force (21, 22, 23, 24) sont agencés de façon à détecter le stimulus tactile qui génère une contrainte de tension dans le gel.

8. Dispositif d'affichage selon la revendication 6 dans lequel le réseau de transducteurs sensibles à la force (21, 22, 23, 24) sont agencés de façon à détecter le stimulus tactile qui génère une contrainte de torsion dans le gel.

9. Dispositif d'affichage selon l'une quelconque des revendications précédentes dans lequel l'écran d'affichage comprend un écran d'affichage à tube à rayon cathodique (40).

10. Dispositif d'affichage selon l'une quelconque des revendications précédant la revendication 9, dans lequel l'écran d'affichage comprend un écran d'affichage à cristaux liquides.
